# EUROPÄISCHE PATENTSCHRIFT

(11) **EP 3 480 672 B1**
(45) Veröffentlichungstag und Bekanntmachung des Hinweises auf die Patenterteilung: **19.02.2020**
(21) Anmeldenummer: 17200152.1
(22) Anmeldetag: 06.11.2017
(51) Int. Cl.: G05B 23/02

(54) **VERFAHREN ZUM ERKENNEN UND ANZEIGEN VON OPERATOR-ZUGRIFFEN AUF PROZESSOBJEKTE SOWIE OPERATOR-SYSTEM**
METHOD FOR IDENTIFYING AND INDICATING OPERATOR ACCESS TO PROCESS OBJECTS AND OPERATOR SYSTEM
PROCÉDÉ DE DÉTECTION ET D'AFFICHAGE D'ACCÈS D'OPÉRATEUR À DES OBJETS DE TRAITEMENT AINSI QUE SYSTÈME D'EXPLOITATION

(43) Veröffentlichungstag der Anmeldung: 08.05.2019
(73) Patentinhaber: Siemens Aktiengesellschaft, 80333 München (DE)
(72) Erfinder: Lutz, Benjamin, 76327 Pfinztal (DE)

(56) Entgegenhaltungen:
- EP-A1- 2 149 825
- US-A1- 2013 021 355
- US-B2- 7 457 675

## Beschreibung

Die Erfindung betrifft ein Verfahren zur Erkennen und Anzeigen von Operator-Zugriffen auf Prozessobjekte im Rahmen einer Prozessführung und Prozessbeobachtung gemäß dem Oberbegriff des Anspruchs 1. Die Erfindung betrifft ferner ein Operator-System gemäß dem Oberbegriff des Anspruchs 4 zur Durchführung des Verfahrens.

In der Prozessleittechnik sind gewöhnlich hunderte von Anlagenbildern und mehrere tausend Prozessobjekte zu bearbeiten, wobei ein Prozessobjekt mehrere zusammengehörige Facetten aufweist. Beispielsweise umfasst ein Prozessabbild eines Servers eines Operator-Systems zu diesen Prozessobjekten gehörige Prozessabbild-Bausteine bzw. bedien- und beobachtungsrelevante Prozessdaten dieser Prozessobjekte, ein Automatisierungsgerät zu den Prozessobjekten gehörige Automatisierungs-bausteine bzw. Steuerbausteine (CFCs, SFCs, ...) und ferner ein User-Interface eines Clients des Operator-Systems zu den Prozessobjekten gehörige Blocksymbole eines Anlagenbildes sowie so genannte Faceplates, wobei die Anlagenbilder zur Prozessbeobachtung und die Faceplates zur Prozessführung bzw. Prozessbedienung vorgesehen sind.

Die Prozessobjekte einer zu steuernden technischen Anlage, z. B. Prozessobjekte in Form von Messstellen, Tanks, Ventile, Sensoren, Aktuatoren, ..., sowie so genannte Continuous Function Charts (CFCs) und Sequential Function Charts (SFCs) werden gewöhnlich in einer so genannten Equipment-Hierarchie (EQH) strukturiert, wobei ein Anwender diese Equipment-Hierarchie zunächst mittels einer geeigneten Software eines Engineering-Systems erstellt. Anschließend wird die derart erstellte Equipment-Hierarchie mittels des Engineering-Systems kompiliert und in Operator-Server von Operator-Systemen eines Prozessleitsystems geladen (Compile & Download), wobei zur Laufzeit der Operator-Systeme bzw. des Prozessleitsystems die Equipment-Hierarchie als zentrale Anlaufstelle z. B. für einen Batchprozess oder zur Navigation bzw. zur Ermittlung eines Prozessobjektes innerhalb der Equipment-Hierarchie genutzt wird. Die Equipment-Hierarchie weist neben ersten Knoten, die Anlagenbilder repräsentieren, auch zweite Knoten auf, welche die Prozessobjekte repräsentieren. Ein Operator kann einerseits durch Selektion bzw. durch Anklicken eines Anlagenbild-Knotens das entsprechende Anlagenbild zur Darstellung auf einer Anzeigeeinheit öffnen, und anderseits durch Selektion bzw. durch Anklicken eines Prozessobjekt-Knotens ein diesem Prozessobjekt zugehöriges Faceplate öffnen, wodurch der Operator das Prozessobjekt bedienen kann.

Auch mit einer weiteren, einer so genannten Bildhierarchie ist es möglich, im Rahmen einer Prozessbedienung und Prozessbeobachtung in verfahrenstechnischen Anlagen zu navigieren. Jedes Anlagenbild wird in der Bildhierarchie als Knoten hierarchisch repräsentiert und durch Selektion bzw. Anklicken dieses Knotens wird das Anlagenbild geöffnet und auf dem Operator-Client dargestellt, wobei ein derartiges Anlagenbild grafische Bildsymbole sowie Blocksymbole der Prozessobjekte umfasst.

Um insbesondere bei Prozessstörungen das Navigieren zu erleichtern, können die Hierarchien durch Alarmstatusinformation "dynamisiert" werden, was bedeutet, dass Alarme, die auf die Störungen im Prozess hinweisen, den Operatoren angezeigt werden, indem z. B. in einem Anlagenbild ein Block-Symbol eines Prozessobjekts, welches einen Alarm meldet, auch in der Equipment- und/oder Bildhierarchie am entsprechenden Knoten durch ein Alarmsymbol dargestellt wird. Dadurch kann ein Operator gezielt die Anlagenbilder öffnen, die "alarmgebende" Block-Symbole von Prozessobjekten aufweisen, oder gezielt die entsprechende Prozessobjekt-Knoten öffnen, um entsprechende Prozessbedienungen bewerkstelligen zu können.

Aufgrund dessen, dass in einem Prozessleitsystem gewöhnlich hunderte von Anlagenbildern und tausende von Prozessobjekten vorhanden sind, sind die Bildhierarchie und die Equipment-Hierarchie sehr umfangreich. Darüber hinaus sind zum Betrieb der Anlage zahlreiche Operatoren gleichzeitig - oft auch räumlich in verschiedenen Leitwarten getrennt - im Einsatz. Dadurch ist es für die Operatoren sehr schwierig, sich zu koordinieren, insbesondere in Ausnahmesituationen, wenn quasi gleichzeitig sehr viele Alarme auftreten und bearbeitet werden müssen, um die Anlage wieder in einen sicheren Zustand fahren zu können. Gewöhnlich wird eine Koordination der Zugriffe bzw. der Bearbeitungen über gängige Kommunikationsmittel (E-Mail, Telefon, ...) bewerkstelligt. Um eine Anlage in einer solchen Ausnahmesituation wieder effizient, sicher und schnell in den Regelbetrieb überführen zu können, ist eine derartige Koordination oft fehlerbehaftet und wenig effizient.

Aus der US 7,457,675 B2 ist ein Verfahren gemäß dem Oberbegriff des Anspruchs 1 bekannt.

Der Erfindung liegt daher die Aufgabe zugrunde, ein Verfahren der eingangs genannten Art anzugeben, mittels dessen eine effiziente Koordination von Operator-Zugriffen ermöglicht wird. Darüber hinaus ist ein Operator-System gemäß dem Oberbegriff des Anspruchs 4 zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Operator-Systems durch die im kennzeichnenden Teil des Anspruchs 4 angegebenen Maßnahmen gelöst.

Vorteilhaft ist, dass die Bedienungen bzw. Handlungen von Operatoren automatisch erkannt, zugeordnet und visualisiert werden, wodurch eine optimierte und automatisch geführte Koordination der Operatoren ermöglicht wird um effizient und schnell die Anlage in einem sicheren Zustand führen zu können. Absprachen der Operatoren untereinander über Kommunikationsmittel sind nicht erforderlich. Ferner werden Mehrfachbedienungen zu Lasten der Bearbeitung von noch anstehenden Prozessalarmen vermieden, wodurch eine effiziente Behandlung von verfahrenstechnischen Anlagen in Ausnahmesituationen ermöglicht wird.

Weitere vorteilhafte Ausgestaltungen der Erfindung ergeben sich aus den Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form:
Figur 1 Bestandteile eines Leitsystems,
Figur 2 eine Equipment-Hierarchie und ein Anlagenbild und
Figur 3 eine Bildhierarchie und ein Anlagenbild.

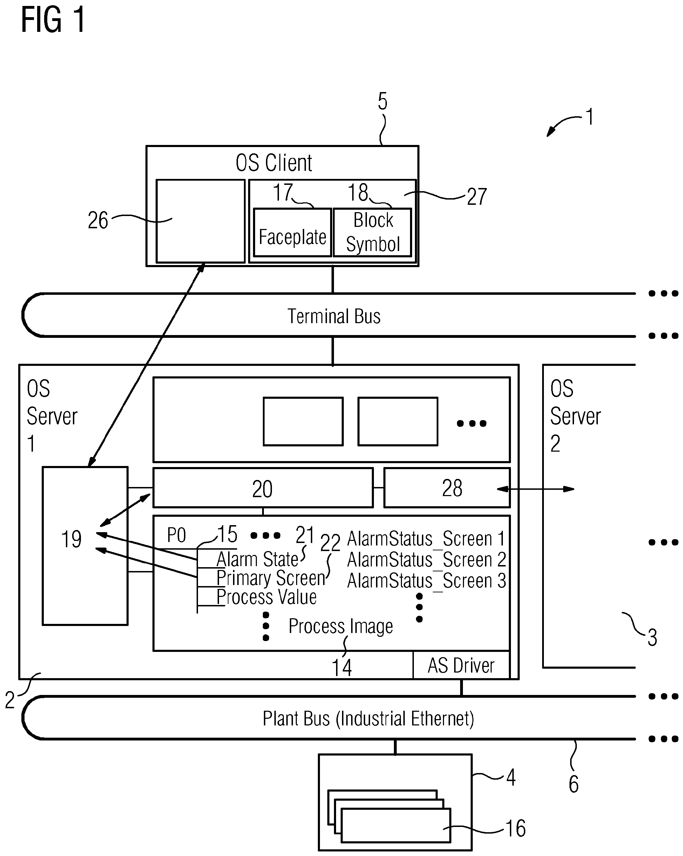

Die in den Figuren 1 bis 3 dargestellten gleichen Teile sind mit gleichen Bezugszeichen versehen.

In Figur 1 sind mit 1 Bestandteile eines Prozessleitsystems bezeichnet, die im vorliegenden Ausführungsbeispiel Operator-Server 2, 3 sowie ein Automatisierungsgerät 4 und einen Operator-Client 5 umfassen. Das Prozessleitsystem kann selbstverständlich eine Vielzahl von Automatisierungsgeräten aufweisen, die einerseits über einen Plant Bus 6 mit den Operator-Servern 2, 3 und andererseits über einen weiteren hier nicht dargestellten Bus mit dezentralen Peripherien verbunden sind, an welche eine Vielzahl von Feldgeräten (Sensoren, Aktuatoren) angeschlossen sind. Im vorliegenden Beispiel ist lediglich ein Operator-Client 5 dargestellt. Selbstverständlich können weitere OS-Clients vorgesehen sein, wobei gewöhnlich jeweils ein Operator-Server und ein Operator-Client ein Operator-System bzw. eine Operator-Station bilden.

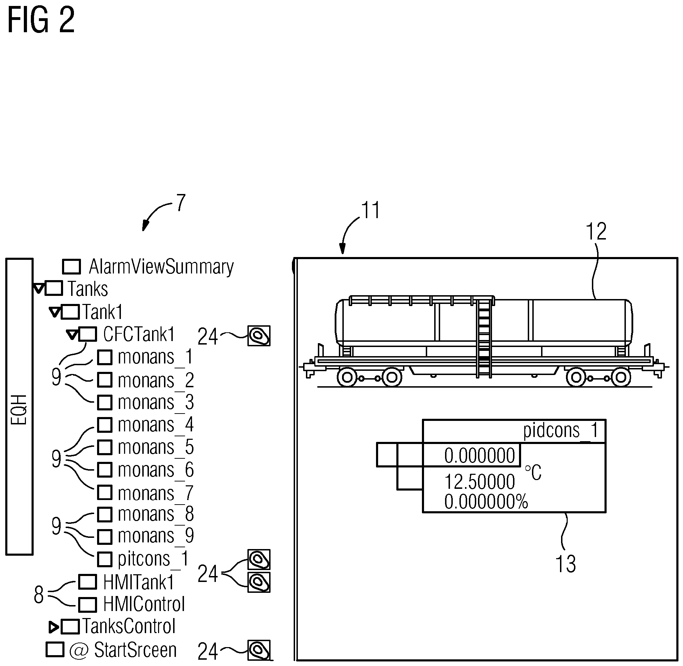

Ein Anwender erstellt mittels einer geeigneten Software eines hier nicht dargestellten Engineering-Systems des Prozessleitsystems eine Equipment-Hierarchie (EQH) 7 (Figur 2), welche eine technologische Sicht einer zu steuernden technischen Anlage repräsentiert. In dieser Equipment-Hierarchie 7 sind strukturiert gemäß einer Baumstruktur Knoten 8, 9 eingetragen bzw. hinterlegt, von denen die Knoten 8 Anlagenbilder, z. B. "HMITank1" und "HMIControl", und die Knoten 9 CFC-Pläne und Prozessobjekte, beispielsweise Überwachungs- und Reglerobjekte ("monans_1", ..., "pidcons_1"), repräsentieren.

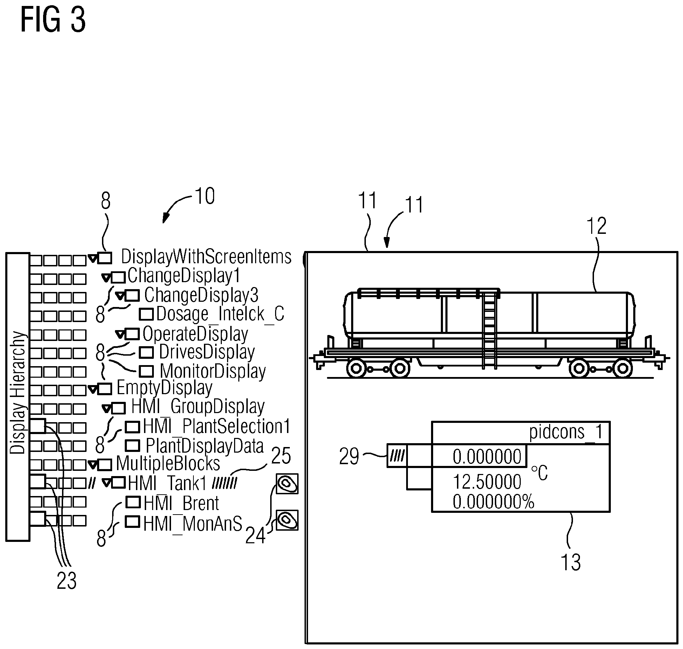

Mittels der genannten oder einer weiteren geeigneten Software des Engineering-Systems erstellt der Anwender ferner eine Bildhierarchie (Display Hierarchy) 10 (Figur 3), in welcher ebenfalls strukturiert Knoten 8 eingetragen bzw. hinterlegt sind, die Anlagenbilder, z. B. "HMI_Brent" und "HMI_MonAnS") repräsentieren.

Die jeweiligen Anlagenbilder können online, d. h. während der Prozesssteuerung - geöffnet werden, indem zur Prozessbeobachtung ein Operator jeweils den entsprechenden Anlagenbild-Knoten 8 der Equipment-Hierarchie 7 oder der Bildhierarchie 10 selektiert bzw. mittels einer "Maus" anklickt, wodurch das dem selektierten Anlagen-Knoten zugehörige Anlagenbild geöffnet und auf dem Operator-Client 5 dargestellt wird. Das vorliegende Beispiel zeigt einen Ausschnitt eines Anlagenbildes 11, das ein grafisches Bildsymbol 12 und ein zu einem Prozessobjekt gehöriges Block-Symbol 13 umfasst, wobei das Block-Symbol 13 zur Prozessbeobachtung vorgesehen ist und aktuelle Prozesswerte, Parameter und Alarmkennzeichnungen 29 dieses Prozessobjektes während der Prozesssteuerung anzeigt.

Im Hinblick auf eine Prozessführung kann der Operator z. B. dieses Prozessobjekt - beispielsweise durch Ändern des Sollwerts und/oder weiteren Parameter - beeinflussen, indem er den entsprechenden Knoten 9 für dieses Prozessobjekt in der Equipment-Hierarchie 7 selektiert bzw. "anklickt". Dadurch wird ein zu diesem Prozessobjekt gehöriges hier nicht dargestelltes zur Prozessführung vorgesehenes Faceplate geöffnet und auf dem Operator-Client 5 dargestellt, wobei dieses Faceplate entsprechende Felder zum Eingeben, Ändern und/oder Löschen von Parametern des Prozessobjektes aufweist.

Es wird darauf hingewiesen, dass unter dem Begriff "Prozessobjekt" die jeweiligen Facetten eines Prozessobjektes verstanden wird, die im Operator-Client 5, in einem Prozessabbild 14 des Operator-Servers 2 und im Automatisierungsgerät 4 hinterlegt sind. So weist das Prozessabbild 14 des Operator-Servers 2 des Operator-Systems einen zu diesem Prozessobjekt gehörigen Prozessabbild-Baustein 15, das Automatisierungsgerät 4 ein zu diesem Prozessobjekt gehörigen Automatisierungsbaustein 16 und ferner ein User-Interface 26 des Operator-Clients 5 ein zu diesem Prozessobjekt gehöriges Faceplate 17 und Blocksymbol 18 eines Anlagenbildes 27 auf.

Um eine effiziente Koordination von Operator-Zugriffen zu ermöglichen, weisen die Operator-Server 2,3 eine erste Komponente 19 auf, die mit dem User-Interface 26 zusammenwirkt. Diese erste Komponente 19 ist dazu ausgebildet, die im Prozessleitsystem auf allen Operator-Servern 2, 3 vorhandenen Prozessobjekte aus Projektierungsdaten zu ermitteln, die das Engineering-System dem jeweiligen Operator-Server 2 übermittelt. Ferner sind die Operator-Server 2, 3 mit einer zweiten Komponente 20 versehen, die dazu ausgebildet ist, alle während der Prozesssteuerung auftretende Alarme der jeweiligen Prozessobjekte auf einen Alarm-Tag 21 des zu dem jeweiligen Prozessobjekt gehörigen Prozessabbild-Bausteins 15 des Prozessabbildes 14 abzubilden. Diese Alarme weisen auf Prozessstörungen hin und werden mittels des oder der Automatisierungs-Bausteine 16 des Automatisierungsgerätes 4 dem jeweiligen Operator-Server 2, 3 übermittelt.

Für den Fall, dass die erste Komponente 19 eine Anfrage an die zweite Komponente 20 stellt, für welche der von der ersten Komponente 19 ermittelten Prozessobjekte eine Anmeldung für den Alarm-Tag 21 vorliegt, was auf einen Operatorzugriff auf diese Prozessobjekte bzw. auf eine Operatorhandlung hinweist, kennzeichnet die erste Komponente 19 diese Prozessobjekte in der Equipment-Hierarchie 7 und/oder in der Bildhierarchie 10 mittels einer geeigneten Markierung 24 (Figuren 2 und 3). Eine Anmeldung für den Alarm-Tag 21 liegt dann vor, wenn ein Operator ein Anlagenbild öffnet, in dem das zu diesem Prozessobjekt gehörige Block-Symbol eingeblendet wird oder wenn ein Operator das Faceplate für dieses Prozessobjekt öffnet, um es zu bedienen. Dadurch wird automatisch erkannt, mit welchen Prozessobjekten Operatoren gerade interagieren. Über Änderungen am Alarm-Tag 21 wird mittels der zweiten Komponente (20) die erste Komponente (19) informiert.

Die zweite Komponente 20, die dazu ausgebildet ist, alle während der Prozesssteuerung auftretende Alarme der jeweiligen Prozessobjekte auf einen Alarm-Tag 21 des zu dem jeweiligen Prozessobjekt gehörigen Prozessabbild-Bausteins 15 des Prozessabbildes 14 abzubilden, ist ferner dazu ausgebildet, das primär einem alarmgebenden Prozessobjekt zugeordnete Anlagenbild - Primary Screen 22 - zu ermitteln, wobei z. B. das diesem Primary Screen 22 zugehörige Anlagenbild 27 des Operator-Clients 5 darstellbar ist. Der Primary Screen 22 repräsentiert das Anlagenbild 27, für dessen Alarm das Prozessobjekt in der Bildhierarchie alarmgebend ist, wodurch die Verbindung zwischen Prozessobjekt und Anlagenbild hergestellt werden kann. Mittels einer weiteren Komponente 28 kann diese Information auf jedem Operator-Server 2, 3 gesammelt und für jeden Operator-Client 5 bereitgestellt werden.

Im Folgenden wird auf die Figuren 2 und 3 verwiesen, in welchen zur Laufzeit bzw. während der Prozesssteuerung durch die Markierungen 24 gekennzeichnet ist, auf welche Prozessobjekte die Operatoren gerade zugreifen, wobei z. B. ein markiertes Prozessobjekt "pidcons_1" in der Equipment-Hierarchie 7 auch als Blocksymbol 13 im Anlagenbild 11 dargestellt ist (Figur 2) .

Aufgrund der Darstellung der Operatorenhandlungen wird eine optimierte Koordination der Bedienung und Beobachtung in der Bildhierarchie 10 und/oder Equipment-Hierarchie 7 zur Laufzeit ermöglicht. Im vorliegenden Beispiel, in welchem Alarme mit 23 (Figur 3) bezeichnet sind, hat ein Operator gerade das Anlagenbild "HMITank1" geöffnet, was in der Figur 3 mittels einer Schraffur 25 dargestellt ist, um das darin alarmgebende Prozessobjekt zu bedienen. Dieser Operator kann unmittelbar an der angezeigten Markierung 24 in der Bildhierarchie 10 erkennen, dass ein anderer Operator gerade einen Alarm im Anlagenbild "HMI_MonAnS" bearbeitet und ferner noch kein Operator den Alarm 23 im Anlagenbild "HMI_PlantSection1" bearbeitet. Ohne Absprachen der Operatoren untereinander können die Operatoren erkennen, welche alarmgebenden Prozessobjekte noch zu bearbeiten sind, wobei Maßnahmen vorgesehen werden können, gerade nicht an einer Prozessführung beteiligte Operatoren an die Stellen in der Bildhierarchie 10 zu führen, an denen Bedienungen zur Alarmbearbeitung bzw. Alarmbehebung erforderlich sind.

## Patentansprüche

1. Verfahren zum Erkennen und Anzeigen von Operator-Zugriffen auf Prozessobjekte im Rahmen einer Prozessführung und Prozessbeobachtung, wobei
- zumindest ein Operator-Server (2, 3) eines Prozessleitsystems ein Prozessabbild (14) aufweist, das mit zu Prozessobjekten gehörigen Prozessabbild-Bausteinen (15) versehen ist,
- zumindest ein Automatisierungsgerät (4) mit zu den Prozessobjekten gehörigen Automatisierungs-Bausteinen (16) versehen ist,
- zur Prozessbeobachtung ein User-Interface (26) mit zu den Prozessobjekten gehörigen Block-Symbolen (13, 18) von Anlagenbildern (11) versehen ist,
- zur Prozessführung das User-Interface (26) mit zu den Prozessobjekten gehörigen Faceplates (17) versehen ist,
- zum Öffnen der Anlagenbilder (11) zur Darstellung auf einer Anzeige für das jeweilige Anlagenbild ein durch einen Anwender selektierbarer Knoten (8, 9) in einer Bildhierarchie (10) und/oder in einer Equipment-Hierarchie (7) hinterlegt ist, wobei das Anlagenbild (11) grafische Bild-Symbole (12) und die zu den Prozessobjekten gehörigen Block-Symbole (13) umfasst,
**dadurch gekennzeichnet, dass**
- mittels einer ersten Komponente (19) des Operator-Servers (2, 3) die Prozessobjekte aus Projektierungsdaten eines Engineering-Systems des Prozessleitsystems ermittelt werden,
- mittels einer zweiten Komponente (20) des Operator-Servers (2) Alarme der jeweiligen Prozessobjekte auf einen Alarm-Tag (21) des zu dem jeweiligen Prozessobjekt gehörigen Prozessabbild-Bausteins (15) abgebildet werden, wobei die Alarme auf Prozessstörungen hinweisen und diese mittels der Automatisierungs-Bausteine (16) des Automatisierungsgerätes (4) dem Operator-Server übermittelt werden,
- die Knoten (8, 9) in der Bildhierarchie (10) und/oder der Equipment-Hierarchie (7) mittels der ersten Komponente (19) markiert werden, die ein alarmgebendes Prozessobjekt umfassen, wobei für den Fall, dass ein Operator einen derartigen Knoten (8, 9) selektiert, dieser Knoten (8, 9) mit einer weiteren Kennzeichnung (24) markiert wird.

2. Verfahren nach Anspruch 1, **dadurch gekennzeichnet, dass** mittels der zweiten Komponente (20) die erste Komponente (19) über Änderungen des Alarm-Tags (21) informiert wird.

3. Verfahren nach Anspruch 1 oder 2, **dadurch gekennzeichnet, dass** mittels der zweiten Komponente (20) das primär dem Prozessobjekt zugeordnete Anlagenbild ermittelt wird.

4. Operator-System für ein Prozessleitsystem, umfassend ein Operator-Server (2, 3) und ein User-Interface (26), wobei
- der Operator-Server (2, 3) des Operator-Systems ein Prozessabbild (14) aufweist, das mit zu Prozessobjekten gehörigen Prozessabbild-Bausteinen (15) versehen ist,
- zur Prozessbeobachtung das User-Interface (26) eines Operator-Clients (5) des Operator-Systems mit zu den Prozessobjekten gehörigen Block-Symbolen (13) von Anlagenbildern (11) versehen ist,
- zur Prozessführung das User-Interface (26) mit zu den Prozessobjekten gehörigen Faceplates (17), versehen ist,
- zum Öffnen der Anlagenbilder (11) zur Darstellung auf einer Anzeige des Operator-Clients (5) für das jeweilige Anlagenbild ein durch einen Anwender selektierbarer Knoten (8, 9) in einer Bildhierarchie (10) und/oder in einer Equipment-Hierarchie (7) hinterlegt ist, wobei das Anlagenbild (11) grafische Bild-Symbole (12) und die zu den Prozessobjekten gehörigen Block-Symbole (13) umfasst,
**dadurch gekennzeichnet, dass**
- eine erste Komponente (19) des Operator-Servers (2, 3) dazu ausgebildet ist, die Prozessobjekte aus Projektierungsdaten eines Engineering-Systems des Prozessleitsystems zu ermitteln,
- eine zweite Komponente (20) des Operator-Servers (2, 3) dazu ausgebildet ist, Alarme der jeweiligen Prozessobjekte auf einen Alarm-Tag (21) des zu dem jeweiligen Prozessobjekt gehörigen Prozessabbild-Bausteins (15) abzubilden, wobei die Alarme auf Prozessstörungen hinweisen, die zu den Prozessobjekten gehörigen Automatisierungs-Bausteine (16) eines Automatisierungsgerätes (4) dem Operator-Server (2, 3) übermittelt,
- die erste Komponente (19) dazu ausgebildet ist, die Knoten (8, 9) in der Bildhierarchie (10) und/oder der Equipment-Hierarchie (7) zu markieren, die ein alarmgebendes Prozessobjekt umfassen, wobei für den Fall, dass ein Operator einen derartigen Knoten (8, 9) selektiert, die erste Komponente (19) diesen Knoten (8, 9) mit einer weiteren Markierung (24) kennzeichnet.

5. Operator-System nach Anspruch 4, **dadurch gekennzeichnet, dass** die zweite Komponente (20) dazu ausgebildet ist, die erste Komponente (19) über Änderungen des Alarm-Tags (21) zu informieren.

6. Operator-System nach Anspruch 4 oder 5, **dadurch gekennzeichnet, dass** die zweite Komponente (20) ferner dazu ausgebildet ist, das primär dem Prozessobjekt zugeordnete Anlagenbild zu ermitteln.

## Claims

1. Method for identifying and displaying operator accesses to process objects within the scope of process management and process monitoring, wherein
- at least one operator server (2, 3) of a process control system has a process image (14), which is provided with process image modules (15) associated with process objects,
- at least one automation device (4) is provided with automation modules (16) associated with the process objects,
- for process monitoring a user interface (26) is provided with block symbols (13, 18) of system images (11) which are associated with the process objects,
- for process management the user interface (26) is provided with faceplates (17) associated with the process objects,
- in order to open system images (11) for representation on a display for the respective system image, a node (8, 9) which can be selected by a user is stored in an image hierarchy (10) and/or in an equipment hierarchy (7), wherein the system image (11) comprises graphical image symbols (12) and the block symbols (13) associated with the process objects,
**characterised in that**
- a first component (19) of the operator server (2, 3) is used to determine the process objects from project-planning data of an engineering system of the process control system,
- a second component (20) of the operator server (2) is used to reproduce the alarms of the respective process objects on an alarm tag (21) of the process image module (15) associated with the respective process object, wherein the alarms indicate process malfunctions and these are transmitted to the operator server by means of the automation modules (16) of the automation device (4),
- the nodes (8, 9) in the image hierarchy (10) and/or the equipment hierarchy (7) are marked by means of the first component (19), which comprise an alarm-giving process object, wherein in the event that an operator selects a node (8, 9) of this type, this node (8, 9) is marked with a further identifier (24).

2. Method according to claim 1, **characterised in that** the second component (20) is used to inform the first component (19) of changes to the alarm tag (21).

3. Method according to claim 1 or 2, **characterised in that** the second component (20) is used to determine the system image primarily assigned to the process object.

4. Operator system for a process control system, comprising an operator server (2, 3) and a user interface (26), wherein
- the operator server (2, 3) of the operator system has a process image (14), which is provided with process image modules (15) associated with process objects,
- for process monitoring, the user interface (26) of an operator client (5) of the operator system is provided with block symbols (13) of system images (11) which are associated with the process objects,
- for process management the user interface (26) is provided with faceplates (17) associated with the process objects,
- for opening the system images (11) for representation on a display of the operator client (5) for the respective system image, a node (8, 9) which can be selected by a user is stored in an image hierarchy (10) and/or in an equipment hierarchy (7), wherein the system image (11) comprises graphical image symbols (12) and the block symbols (13) associated with the process objects,
**characterised in that**
- a first component (19) of the operator server (2, 3) is embodied to determine the process objects from project-planning data of an engineering system of the process control system,
- a second component (20) of the operator server (2, 3) is embodied to reproduce alarms of the respective process objects on an alarm tag (21) of the process image module (15) associated with the respective process object, wherein the alarms indicate process malfunctions, which transmits automation modules (16) of an automation device (4) associated with the process objects to the operator server (2, 3),
- the first component (19) is embodied to mark the nodes (8, 9) in the image hierarchy (10) and/or the equipment hierarchy (7), which comprise an alarm-giving process object, wherein in the event that an operator selects a node (8, 9) of this type, the first component (19) identifies this node (8, 9) with a further marker (24).

5. Operator system according to claim 4, **characterised in that** the second component (20) is embodied to inform the first component (19) of changes to the alarm tag (21).

6. Operator system according to claim 4 or 5, **characterised in that** the second component (20) is also embodied to determine the system image primarily assigned to the process object.

## Revendications

1. Procédé de détection et d'affichage d'accès d'opérateur à des objets de processus dans le cadre d'une conduite de processus et d'un contrôle de processus, dans lequel
- au moins un serveur (2, 3) d'opérateur d'un système de conduite de processus a une reproduction (14) de processus, qui est pourvue de modules (15) de reproduction de processus appartenant aux objets de processus,
- au moins un appareil (4) d'automatisation est pourvu de modules (16) appartenant aux objets de processus,
- pour l'observation de processus, une interface (26) d'utilisateur est pourvue de symboles (13, 18) bloc, appartenant aux objets de processus, d'images (11) d'installation,
- pour la conduite de processus, l'interface (26) d'utilisateur est pourvue de faceplates (17) appartenant aux objets de processus,
- pour l'ouverture des images (11) d'installation, pour la représentation sur un affichage de l'image d'installation respective, un nœud (8, 9), pouvant être sélectionné par un utilisateur, est mis en mémoire dans une hiérarchie (10) d'image et/ou dans une hiérarchie (7) d'équipement, l'image (11) d'installation comprenant des symboles (12) d'image graphiques et les symboles (13) bloc appartenant aux objets de processus,
**caractérisé en ce que**
- au moyen d'un premier composant (19) du serveur (2, 3) d'opérateur, les objets de processus sont déterminés à partir de données de projection d'un système d'ingénierie du système de conduite de processus,
- au moyen d'un deuxième composant (20) du serveur (2) d'opérateur, des alertes des objets de processus respectifs sont reproduites sur une étiquette (21) du module (15) de reproduction de processus appartenant à l'objet de processus respectif, les alertes indiquant des perturbations de processus étant transmises au serveur d'opérateur au moyen des modules (16) d'automatisation de l'appareil (4) d'automatisation
- les nœuds (8, 9) sont repérés dans la hiérarchie (10) d'image et/ou dans la hiérarchie (7) d'équipement au moyen des premiers composants (19), qui comprennent un objet de processus donnant une alerte, dans lequel, dans le cas où un opérateur sélectionne un nœud (8, 9) de ce genre, ce nœud (8, 9) est repéré par une autre caractérisation (24).

2. Procédé suivant la revendication 1, **caractérisé en ce que** le premier composant (19) est informé de modifications de l'étiquette (21) d'alerte au moyen du deuxième composant (20).

3. Procédé suivant la revendication 1 ou 2, **caractérisé en ce que** l'image d'installation, associée de manière primaire à l'objet de processus, est déterminée au moyen du deuxième composant (20).

4. Système d'opérateur d'un système de conduite de processus, comprenant un serveur (2, 3) d'opérateur et une interface (26) d'utilisateur, dans lequel
- le serveur (2, 3) d'opérateur du système d'opérateur a une reproduction (14) de processus, qui est pourvue de modules (15) de reproduction de processus appartenant aux objets de processus ;
- pour l'observation de processus, une interface (26) d'utilisateur d'un client d'opérateur (5) du système d'opérateur est pourvue de symboles (13) bloc, appartenant aux objets de processus d'images (11) d'installation,
- pour la conduite de processus, l'interface (26) d'utilisateur est pourvue de faceplates (17) appartenant aux objets de processus,
- pour l'ouverture des images (11) d'installation, pour la représentation sur un affichage d'un client d'opérateur (5) de l'image d'installation respective, un nœud (8, 9), pouvant être sélectionné par un utilisateur, est mis en mémoire dans une hiérarchie (10) d'image et/ou dans une hiérarchie (7) d'équipement, l'image (11) d'installation comprenant des symboles (12) d'image graphiques et les symboles (13) bloc appartenant aux objets de processus,
**caractérisé en ce que**
- un premier composant (19) du serveur (2, 3) d'opérateur est constitué pour déterminer les objets de processus à partir de données de projection d'un système d'ingénierie du système de conduit de processus,
- un deuxième composant (20) du serveur (2, 3) d'opérateur est constitué pour reproduire des alertes des objets de processus respectifs sur une étiquette (21) d'alerte du module (15) de reproduction de processus associée à l'objet de processus respectif, les alertes indiquant des perturbations de processus, qui sont transmises au serveur (2, 3) d'opérateur au moyen de modules (16) d'automatisation, appartenant aux objets de processus, d'un appareil (4) d'automatisation,
- le premier composant (19) est constitué pour repérer les nœuds (8, 9) dans la hiérarchie (10) d'image et/ou dans la hiérarchie (7) d'équipement, qui comprennent des objets de processus donnant une alerte, dans lequel, dans le cas où un opérateur sélectionne un nœud (8, 9) de ce genre, le premier composant (19) caractérise ce nœud (8, 9) par un autre repérage (24).

5. Système d'opérateur suivant la revendication 4, **caractérisé en ce que** le deuxième composant (20) est constitué pour informer le premier composant (19) de modifications de l'étiquette (21) d'alerte.

6. Système d'opérateur suivant la revendication 4 ou 5, **caractérisé en ce que** le deuxième composant (20) est constitué, en outre, pour déterminer l'image d'installation associée de manière primaire à l'objet de processus.
